# EUROPEAN PATENT SPECIFICATION

(11) **EP 1 912 915 B1**
(45) Date of publication and mention of the grant of the patent: **14.08.2013**
(21) Application number: 06757734.6
(22) Date of filing: 23.06.2006
(51) Int. Cl.: C04B 26/06, C04B 20/10

(54) **COMPOSITION FOR ACRYLIC ARTIFICIAL MARBLE**
ZUSAMMENSETZUNG FÜR ACRYL-KUNSTMARMOR
COMPOSITION DE MARBRE ARTIFICIEL ACRYLIQUE

(30) Priority: 15.07.2005 KR 20050064243
(43) Date of publication of application: 23.04.2008
(73) Proprietor: CHEIL INDUSTRIES INC., Gumi-si, Gyeongsangbuk-do 730-710 (KR)
(72) Inventor: PARK, Eung Seo, Yeosu-si Jeollanam-do 555-803 (KR); RHA, Do Choon, Seoul 151-848 (KR)
(74) Representative: Bublak, Wolfgang
(86) International application number: PCT/KR2006/002433
(87) International publication number: WO 2007/011114

(56) References cited:
- EP-A2- 0 625 536
- EP-A2- 0 748 818
- WO-A1-97/01515
- JP-A- 2000 317 957
- KR-A- 20030 094 532
- KR-B1- 100 366 568
- US-A- 5 530 041
- US-A- 6 077 575
- DATABASE WPI Week 200345 Thomson Scientific, London, GB; AN 2003-472166 XP002622595, & JP 2002 285006 A (MATSUSHITA ELECTRIC WORKS LTD) 3 October 2002 (2002-10-03)
- DATABASE WPI Week 200649, Derwent Publications Ltd., London, GB; AN 2006-476304 -& KR 2005 0 062 035 A (CHEIL IND INC) 23 June 2005
- DATABASE WPI Week 200649, Derwent Publications Ltd., London, GB; AN 2006-476304 -& KR 2005 0 062 035 A (CHEIL IND INC) 23 June 2005

## Description

### Field of the Invention

The present invention relates to a composition for acrylic artificial marble. More particularly, the present invention relates to the composition for acrylic artificial marble having a novel pattern by employing metal-deposited polyester film particles to maximize diffuse reflectance of artificial marble.

### Background of the Invention

Artificial marble has been widely used as a building material. Artificial marble is classified into two groups according to a base resin material: One is acrylic artificial marble, and the other is unsaturated polyester artificial marble. Recently, the acrylic artificial marble has become widely used for its excellent appearance, high-class texture and good weatherability compared to unsaturated polyester artificial marble.

For example, the acrylic artificial marble is used as a material for kitchen countertops, wash bowls, dressing tables, bathtubs, various table surfaces, wall materials, interior articles, etc.

EP0748818A2 discloses a highly-filled artificial body with "improved glittering effect, whereby "highly-filled" refers to the fact, that the composition contains high amounts of inorganic filler. In fact, example C) of EP0748818A2 discloses a composition comprising: (a) about 100 parts by weight MMA;
(b) about 2.8 parts per weight per 100 parts by weight of acrylic resin of a silvery metal-deposited polyester film particle in form of "Polyesterflitter 25/90" provided by Dragon Werk and (c) about 224 parts by weight of an inorganic filler in form of aluminium hydroxide (plus approx. 37 parts per weight of silicone dioxide based filler material).

Conventional artificial marbles have been focused on realizing natural-stone-like texture. It is necessary, however, to develop artificial marble of various patterns and designs as application of artificial marble diversifies and expands.

The present inventors have developed the composition for artificial marble having metal gloss by adding aluminum powder thereto (Korean Patent Application No. 2004-103499). Though it was successful in giving a metallic appearance or feeling to the artificial marble, it was limited in creating various and more sophisticated patterns. Particularly, there is an urgent need to develop advanced products as consumers favor more luxurious and sophisticated ones.

Accordingly, the present inventors have developed a composition for artificial marble having a luxurious and beautiful appearance by using metal-deposited polyester film particles so that the artificial marble may have novel pattern.

### Objects of the Invention

An object of the present invention is to provide a composition for artificial marble having novel pattern by using particles prepared by pulverizing a metal-deposited polyester film.

Another object of the present invention is to provide a composition for artificial marble of more sophisticated patterns by employing the polyester film particles deposited with a plurality of metal layers to maximize the diffuse reflectance of the artificial marble.

Other objects and advantages of this invention will be apparent from the ensuing disclosure and appended claims.

### Summary of the Invention

One aspect of the invention provides a composition for acrylic artificial marble, comprising
(a) about 100 parts by weight of an acrylic resin polymer; (b) about 0.1 to 5 parts by weight of metal-deposited polyester film particles; and (c) about 120 to 160 parts by weight of an inorganic filler.

In some embodiments, the metal-deposited polyester film particles are prepared by depositing a plurality of metal layers onto a surface of the polyester film and cutting or pulverizing the metal-deposited polyester film into a size of about 0.001 to 2.5 mm.

In some embodiments, the thickness of metal-deposition on the polyester film particles is about 1 to 10 *µ*m.

In some embodiments, the composition further comprises about 0.1 to 10 parts by weight of a polymerization initiator.

In some embodiments, the acrylic resin polymer (a) is a mixture of acrylic monomer selected from the group consisting of methacrylic acid, methyl methacrylate, ethyl methacrylate, isopropyl methacrylate, n-butyl methacrylate and 2-ethylhexyl methacrylate and polyacrylate, wherein the acrylic monomer is equal to or more than 65 % by weight and the polyacrylate is equal to or less than 35 % by weight.

In some embodiments, the inorganic filler (c) may be calcium carbonate, aluminum hydroxide, silica, alumina, barium sulfate, magnesium hydroxide, etc.

In some embodiments, the composition may further comprise a marble chip having a particle size of about 0.1 to 5 mm.

### Brief Description of the Drawings

Fig. 1 is a photograph showing a surface pattern of artificial marble which contains metal-deposited polyester film particles.
Fig. 2 is a photograph showing a surface pattern of artificial marble product obtained in Comparative Example.

### Detailed Description of the Invention

The composition for acrylic artificial marble according to the present invention comprises (a) about 100 parts by weight of an acrylic resin polymer, (b) about 0.1 to 5 parts by weight of metal-deposited polyester film particles, and (c) about 120 to 160 parts by weight of an inorganic filler. The detailed description of the present invention is as follows.

### (a) Acrylic Resin Polymer

The acrylic resin polymer that can be used with the present invention is a mixture of acrylic monomer and its polymer, polyacrylate, dissolved therein.

Typical examples of the acrylic monomer include methacrylic acid, methyl methacrylate, ethyl methacrylate, isopropyl methacrylate, n-butyl methacrylate, and 2-ethylhexyl methacrylate, and so forth.

The polyacrylate can be a homopolymer or copolymer of methyl methacrylate, ethyl methacrylate, isopropyl methacrylate, n-butyl methacrylate, 2-ethyl hexyl methacrylate, or the like. Among these, polymethylmethacrylate (PMMA) may be preferred.

In one embodiment, the acrylic monomer is equal to or more than 65 % by weight and the polyacrylate is equal to or less than 35 % by weight based on total acrylic resin polymer.

### (b) Metal-deposited Polyester Film Particles

The metal-deposited polyester film particle is used to provide a novel pattern for an artificial marble. The content of the metal-deposited polyester film particles is in the range from about 0.1 to about 5 parts by weight per 100 parts by weight of an acrylic resin polymer.

Generally, conventional glittering particles are produced by coating and printing polyester film with a colorant and cutting the coated or printed film. However, when these coated or printed glittering particles are employed to acrylic artificial marble, they do not reflect light well, so the glittering effect is insufficient.

In the present invention, on the polyester film is deposited a plurality of metal layers to maximize the diffuse reflecatnace, so that the glittering effect may be increased.

The metal-deposited polyester film particles of the present invention are produced by depositing a plurality of metal layers onto the surface of the polyester film and cutting or pulverizing the metal-deposited polyester film into pieces or particles with a size of about 0.001 to 2.5 mm.

The thickness of the polyester film may be about 30 to 100 *µ*m. If the thickness is less than 30 *µ*m, it might cause deformation. If the thickness is more than 100 *µ*m, it might weaken flexibility.

On the polyester film are preferably deposited multiple metal layers rather than a single layer. Accordingly, the glittering effect may be increased due to a discontinuity between layers. In order to increase the discontinuity, deposition direction or deposition angle may be varied between the layers.

The numbers of metal-deposition are not particularly limited, but the total thickness of metal-deposition on the polyester film particles may preferably be about 1 to 10 *µ*m and more preferably about 1 to 3 *µ*m.

The metal-deposited polyester film is cut or pulverized into pieces or particles with a size of about 0.001 to 2.5 mm to provide a novel pattern, more preferably about 0.004 to 2.5 mm. The cut or pulverized particles of one single size or of various sizes may be used. If the particle size is more than 2.5 mm, it might not have as beautiful of a pattern as expected, and if the size is less than 0.001 mm, the reflecting effect might be insufficient.

In the present invention, a more splendid appearance and novel pattern may be produced by employing metal-deposited polyester film particles, and the diffuse reflectance may be maximized by glittering particles which make the particles appear larger than they actually are.

The content of the metal-deposited polyester film particles is in the range from about 0.1 to about 5 parts by weight per 100 parts by weight of an acrylic resin polymer. If the content is more than 5 parts by weight, it may be difficult to provide the desired appearance due to inefficient diffusion, and if the content is less than 0.1 parts by weight, reflectance might be insufficient.

In some embodiments, conventional artificial marble chips having sizes from about 0.1 mm to about 5 mm may be optionally added to provide artificial marbles with various patterns.

The marble chips can be prepared by a conventional method. For example, the marble chips may be prepared by mixing 100 parts by weight of acrylic resin polymer, about 120 to 200 parts by weight of an inorganic filler, about 0.1 to 10 parts by weight of a cross linking agent and about 0.1 to 10 parts by weight of an initiator, curing the mixture and pulverizing the cured material into particles with a size of about 0.1~5 mm.

The marble chips may be added up to about 100 parts by weight per 100 parts by weight of an acrylic resin polymer.

### (c) Inorganic Filler

As the inorganic filler, any inorganic materials, which are well known in the art as fillers, can be used. Typical examples of the inorganic filler include calcium carbonate, aluminum hydroxide, silica, alumina, barium sulfate, magnesium hydroxide, etc. Preferably, the inorganic filler to be used with the present invention may have a particle size of about 1 to 100 *µ*m.

Among them, aluminium hydroxide is most preferable in view of the transparent and elegant appearance of artificial marble to be obtained.

The content of the inorganic filler may be in the range from about 120 to about 160 parts by weight, per 100 parts by weight of acrylic resin polymer. If less than 100 parts by weight is added, the viscosity of the slurry becomes high, so that strength and hardness of the artificial marble obtained therefrom can be deteriorated. On the other hand, if the content is more than 200 parts by weight, workability may be reduced.

### (d) Polymerization Initiator

Examples of the polymerization initiator include peroxides such as benzoyl peroxide, lauroyl peroxide, butyl hydroperoxide, cumyl hydroperoxide, etc., and azo compounds such as azobisisobutyronitrile and the like.

The content of the polymerization initiator may be in the range from about 0.1 to 10 parts by weight, per 100 parts by weight of acrylic resin polymer.

The artificial marble of the present invention can be prepared by a conventional method. For example, all the components and additives are mixed together to obtain a slurry of artificial marble. Then the slurry is poured into a molding cell, followed by curing to form an artificial marble product.

The invention may be better understood by reference to the following examples which are intended for the purpose of illustration and are not to be construed as in any way limiting the scope of the present invention, which is defined in the claims appended hereto.

### Example

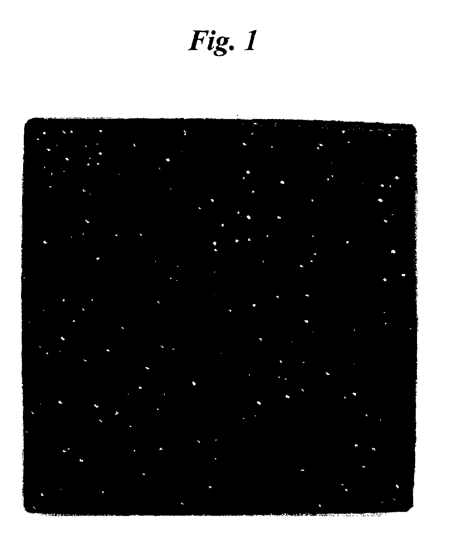

100 parts by weight of methyl methacrylate resin syrup consisting of a mixture of 30 % of polymethyl methacrylate and 70 % of methylmethacrylate, 0.7 parts by weight of metal-deposited polyester film particles having a particle size of about 0.2 mm (Hologram Silver JW1401 manufactured from Changwon Industrial Co.) and 1 part by weight of metal-deposited polyester film particles having a particle size of about 0.8 mm (Hologram Silver JW1401 manufactured from Changwon Industrial Co.), 120 parts by weight of aluminum hydroxide, and 2 parts by weight of lauroyl peroxide were mixed to obtain a slurry mixture for artificial marble. The slurry mixture was poured into a molding cell and cured to obtain a solid surface article in the form of a flat plate. The resulting article is shown in the photograph of Figure 1.

### Comparative Example

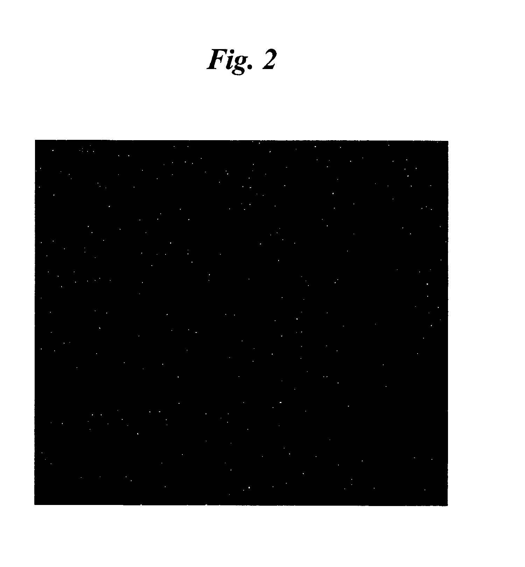

100 parts by weight of methyl methacrylate resin syrup consisting of a mixture of 30 % of polymethyl methacrylate and 70% of methylmethacrylate, 0.4 parts by weight of glittering particles having a particle size of about 0.2 mm (Silver JW101 manufactured from Changwon Industrial Co.), 120 parts by weight of aluminum hydroxide, and 2 parts by weight of lauroyl peroxide were mixed to obtain a slurry mixture for artificial marble. The slurry mixture was poured into a molding cell and cured to obtain a solid surface article in the form of a flat plate. The resulting article is shown in the photograph of Figure 2.

## Claims

1. A composition for acrylic artificial marble comprising:
(a) about 100 parts by weight of an acrylic resin polymer;
(b) about 0.1 to 5 parts by weight of metal-deposited polyester film particles; and
(c) about 120 to 160 parts by weight of an inorganic filler.

2. The composition for acrylic artificial marble as defined in Claim 1, wherein the metal-deposited polyester film particles are prepared by depositing a plurality of metal layers onto the surface of the polyester film and cutting or pulverizing the metal-deposited polyester film into particles with a size of about 0.001 to 2.5 mm.

3. The composition for acrylic artificial marble as defined in Claim 1, wherein the thickness of metal-deposition on the polyester film particles is about 1 to 10 µm.

4. The composition for acrylic artificial marble as defined in Claim 1, further comprising about 0.1 to 10 parts by weight of a polymerization initiator.

5. The composition for artificial marble as defined in Claim 1, wherein the acrylic resin polymer (a) is a mixture of acrylic monomers selected from the group consisting of methacrylic acid, methyl methacrylate, ethyl methacrylate, isopropyl methacrylate, n-butyl methacrylate and 2-ethylhexyl methacrylate and polyacrylate, wherein the acrylic monomer is equal to or more than 65 % by weight and the polyacrylate is equal to or less than 35 % by weight.

6. The composition for acrylic artificial marble as defined in Claim 1, wherein said inorganic filler (c) is selected from the group consisting of calcium carbonate, aluminum hydroxide, silica, alumina, barium sulfate, and magnesium hydroxide.

7. The composition for acrylic artificial marble as defined in Claim 1, further comprising marble chips having a particle size of about 0.1 to 5 mm.

8. An acrylic artificial marble article produced by the composition in any one of Claims 1 to 7.

## Patentansprüche

1. Zusammensetzung für Acrylkunstmarmor, umfassend
(a) etwa 100 Gewichtsteile eines Acrylharzpolymers;
(b) etwa 0,1 bis 5 Gewichtsteile metallabgeschiedene Polyesterfilmteilchen; und
(c) etwa 120 bis 160 Gewichtsteile eines anorganischen Füllstoffs.

2. Zusammensetzung für Acrylkunstmarmor nach Anspruch 1, wobei die metallabgeschiedenen Polyesterfilmteilchen durch Abscheiden einer Mehrzahl von Metallschichten auf die Oberfläche des Polyesterfilms und Schneiden oder Pulverisieren des metallabgeschiedenen Polyesterfilms zu Teilchen mit einer Größe von etwa 0,001 bis 2,5 mm hergestellt werden.

3. Zusammensetzung für Acrylkunstmarmor nach Anspruch 1, wobei die Dicke der Metallabscheidung auf den Polyesterfilmteilchen etwa 1 bis 10 µm beträgt.

4. Zusammensetzung für Acrylkunstmarmor nach Anspruch 1, des Weiteren umfassend etwa 0,1 bis 10 Gewichtsteile eines Polymerisationsinitiators.

5. Zusammensetzung für Kunstmarmor nach Anspruch 1, wobei das Acrylharzpolymer (a) ein Gemisch aus Monomeren, ausgewählt aus der Gruppe, bestehend aus Methacrylsäure, Methylmethacrylat, Ethylmethacrylat, Isopropylmethacrylat, n-Butylmethacrylat und 2-Ethylhexylmethacrylat, und Polyacrylat ist, wobei das Acrylmonomer gleich oder mehr als 65 Gew.-% ausmacht und das Polyacrylat gleich oder weniger als 35 Gew.-% ausmacht.

6. Zusammensetzung für Acrylkunstmarmor nach Anspruch 1, wobei der anorganische Füllstoff (c) ausgewählt ist aus der Gruppe, bestehend aus Calciumcarbonat, Aluminiumhydroxid, Siliciumdioxid, Aluminiumoxid, Bariumsulfat und Magnesiumhydroxid.

7. Zusammensetzung für Acrylkunstmarmor nach Anspruch 1, des Weiteren umfassend Marmorchips mit einer Teilchengröße von etwa 0,1 bis 5 mm.

8. Acrylkunstmarmorgegenstand, der durch die Zusammensetzung nach einem der Ansprüche 1 bis 7 hergestellt ist.

## Revendications

1. Composition pour marbre artificiel à base de polyacrylique, comprenant :
a) à peu près 100 parties en poids d'une résine de polymère polyacrylique,
b) à peu près 0,1 à 5 parties en poids de particules de film de polyester à dépôt métallique,
c) et environ 120 à 160 parties en poids d'une charge inorganique.

2. Composition pour marbre artificiel à base de polyacrylique, conforme à la revendication 1, pour laquelle on a préparé les particules de film de polyester à dépôt métallique en déposant plusieurs couches métalliques sur la surface d'un film de polyester et en découpant ou pulvérisant le film de polyester à dépôt métallique pour en faire des particules d'à peu près 0,001 à 2,5 mm de taille.

3. Composition pour marbre artificiel à base de polyacrylique, conforme à la revendication 1, dans laquelle l'épaisseur du dépôt métallique sur les particules de film de polyester vaut à peu près de 1 à 10 µm.

4. Composition pour marbre artificiel à base de polyacrylique, conforme à la revendication 1, qui comprend en outre à peu près 0,1 à 10 parties en poids d'un amorceur de polymérisation.

5. Composition pour marbre artificiel à base de polyacrylique, conforme à la revendication 1, dans laquelle la résine de polymère polyacrylique (a) est un mélange de monomère acrylique, choisi dans l'ensemble formé par les acide méthacrylique, méthacrylate de méthyle, méthacrylate d'éthyle, méthacrylate d'isopropyle, méthacrylate de n-butyle et méthacrylate de 2-éthyl-hexyle, et de polyacrylate, dans lequel mélange le monomère acrylique se trouve en une proportion supérieure ou égale à 65 % en poids et le polyacrylate se trouve en une proportion inférieure ou égale à 35 % en poids.

6. Composition pour marbre artificiel à base de polyacrylique, conforme à la revendication 1, pour laquelle ladite charge inorganique (c) est choisie dans l'ensemble formé par du carbonate de calcium, de l'hydroxyde d'aluminium, de la silice, de l'alumine, du sulfate de baryum et de l'hydroxyde de magnésium.

7. Composition pour marbre artificiel à base de polyacrylique, conforme à la revendication 1, qui comprend en outre des fragments de marbre dont la taille de particules vaut à peu près de 0,1 à 5 mm.

8. Article en marbre artificiel à base de polyacrylique, produit à partir d'une composition conforme à l'une des revendications 1 à 7.
